# EUROPÄISCHE PATENTSCHRIFT

(11) **EP 1 505 363 B1**
(45) Veröffentlichungstag und Bekanntmachung des Hinweises auf die Patenterteilung: **27.09.2006**
(21) Anmeldenummer: 04016494.9
(22) Anmeldetag: 13.07.2004
(51) Int. Cl.: G01B 5/255

(54) **Verfahren zur Messung der Radachsen einer Fahrzeugachse**
Method of measuring vehicle wheel alignment parameters
Procédé pour mesurer l'alignement de roues de véhicules

(30) Priorität: 08.08.2003 DE 10336619
(43) Veröffentlichungstag der Anmeldung: 09.02.2005
(73) Patentinhaber: Schenck Final Assembly Products GmbH, 66346 Püttlingen (DE)
(72) Erfinder: Tentrup, Thomas, Dr., 66663 Merzig (DE); Müller, Dietmar, 66287 Quierschied (DE); Blaes, Sabine, 66386 St.Ingbert (DE)
(74) Vertreter: Wieske, Thilo

(56) Entgegenhaltungen:
- EP-A- 1 128 157
- US-A1- 2002 189 114

## Beschreibung

Die Erfindung betrifft ein Verfahren zur Messung der Geometrie der Radachsen einer Achse eines Fahrzeugs nach dem Oberbegriff des Patentanspruchs 1.

Aus der EP 1 128 157 A1 ist ein Verfahren und eine Vorrichtung bekannt, nach der die Geometrie der Radachsen einer Achse eines Fahrzeugs gemessen werden können, indem der Radflansch von einer Haltevorrichtung gegriffen und gehalten wird. Die Haltevorrichtung kann dabei in verschiedene Raumrichtungen beweglich ausgebildet sein, um dadurch Bewegungen der Radachsen durch unterschiedlich eingestellte Gewichtsbelastungen oder in Folge von Einstellvorgängen folgen zu können. Als Radflansch sind bei dieser Anmeldung alle Teile bezeichnet, an denen das Rad mit der Bremsscheibe bei der Montage an der Achse zum Anliegen kommt. Der Radflansch besteht also aus der Radnabe und der Gegenlagerscheibe. Es ist dann im weiteren dargestellt, dass die Achse an der Radnabe als Bestandteil des Radflansches gegriffen wird. Dieses Greifen wird mittels eines Spannfuttersystems realisiert. Die Achse wird dabei stützend gelagert.

Der vorliegenden Erfindung liegt das Problem zugrunde, die Messung bzw. die Messung und Einstellung der Geometrie der Radachsen der Achse eines Fahrzeugs (Spur- und/oder Sturzwinkel) einfach realisierbar zu machen.

Dieses Problem wird erfindungsgemäß nach Anspruch 1 gelöst, wonach das Spannfuttersystem die Radflansche der Achse im Bereich des Außenumfangs der Gegenlagerscheiben für die Räder greift.

Um diese Gegenlagerscheiben im Bereich des Außenumfangs greifen zu können, sind die Bremsscheiben vorteilhaft noch nicht montiert bzw. die Bremsscheiben sind demontiert. Im Herstellungsprozess eines Kraftfahrzeugs kann die Abfolge der Installation der Bauteile so organisiert werden, dass die Bremsscheiben erst montiert werden, wenn die Achse nicht mehr mit der Greifvorrichtung gehalten werden muss.

Die Achse kann gegriffen werden, wobei dieser Greifvorgang gleichzeitig die Durchführung der Messung - ggf. verbunden mit der Durchführung der Einstellung der Geometrie der Radachsen der Achse (Spur- und/oder Sturzwinkel) - ermöglicht. Das Spannfuttersystem übernimmt die stützende Lagerung im Sinne der Simulation der im eingebauten Zustand der Achse durch die dann ebenfalls montierten Räder auftretenden Kräfte.

Das vorliegende Verfahren eignet sich also zur Messung sowie ggf. Einstellung an einer Achse sowohl im nicht eingebauten wie auch im eingebauten Zustand.

Vorteilhaft kann also auch eine Messung während der Einstellung der Geometrie der Radachsen der Achse vorgenommen werden.

Indem das Spannfuttersystem die Radflansche im Bereich des Außenumfangs der Gegenlagerscheiben greift, kann die Achse insbesondere bei Gewichtsbelastungen der Achse sicher gehalten werden, weil im Vergleich zu dem gezeigten Beispiel im Stand der Technik mit einem größeren Moment gehalten werden kann, wenn das Spannfuttersystem im Bereich des Außenumfangs der Gegenlagerscheiben angreift.

In einer vorteilhaften Ausführungsform erfolgt die Abstützung der Achse möglichst nahe an der Simulation der realen Verhältnisse der Achse im eingebauten Zustand. Diese realen Verhältnisse lassen sich so beschreiben, dass die Räder montiert sind und das Fahrzeug über die Räder auf der Straße aufsteht. Die Simulation bei der Halterung der Achse ohne die montierten Räder soll dann so sein, dass die Abstützungspunkte möglichst nahe an den beschriebenen realen Verhältnissen liegen.

In diesem Fall werden die Kräfte näherungsweise punktzentriert im Mittelpunkt der Radaufstandflächen eingeleitet. Dieser Mittelpunkt liegt näherungsweise in einer vertikalen Ebene mit den Radlagern.

Wird also die Einleitung von Kräften entsprechend der Simulation dieser realen Verhältnisse nachgebildet, kommt es zu nicht mehr vernachlässigbaren Momenten, die auf das Spannfuttersystem wirken. Insbesondere in diesem Zusammenhang erweist sich der Angriffspunkt des Spannfuttersystems nach der vorliegenden Erfindung als vorteilhaft, weil dabei die vergleichsweise großen Momente aufgenommen werden können

Bei der Ausgestaltung nach Anspruch 2 ist das Spannfuttersystem so gestaltet, dass die Haltebacken des Spannfuttersystems U-förmig ausgestaltet sind, wobei zumindest die hintere Flanke abgeschrägt ist.

Dadurch wird vorteilhaft erreicht, dass beim Anziehen des Spannfutters beim Greifen der Achse die Haltevorrichtung in Richtung der Achse gezogen wird, weil beim Hintergreifen der Gegenlagerscheibe im Bereich von deren Außenumfang mit der abgeschrägten Flanke der Haltebacken die Haltevorrichtung in Richtung der Achse gezogen wird, wenn die abgeschrägte Flanke beim Anziehen des Spannfutters entlang der (ebenfalls abgeschrägten) hinteren Flächen der Gegenlagerscheibe gleitet.

Dadurch wird die Achse besonders sicher gehalten. Wenn die vordere Flanke des U-förmigen Profils nicht abgeschrägt sondern gerade ist, kann die Achsen gehalten werden, indem die Haltebacken an der Vorder- sowie Rückseite der Gegenlagerscheibe anliegen. Insbesondere ist es nicht erforderlich, die Gegenlagerscheibe unmittelbar am Außenumfang zu greifen, wodurch in besonders vorteilhafter Weise Beschädigungen der Gegenlagerscheibe vermieden werden können.

Bei der Ausgestaltung nach Anspruch 3 wird das Spannfutter so gelagert und gehalten, dass es zumindest um zwei Raumachsen drehbar ist.

Vorteilhaft kann sich dann das Spannfutter der momentanen Orientierung des Radflansches anpassen. Dadurch ist es besonders einfach möglich, die Einstellung der Geometrie der Radachsen der Achse vorzunehmen, während die Achse durch die Vorrichtung gehalten wird. Die Spannfutter sind dann in der Lage, sich in ihrer Orientierung auch Änderungen der Orientierung der Radflansche anzupassen, die bei einer Veränderung dieser Orientierung der Radflansche bei der Einstellung der Geometrie der Radachsen der Achse auftreten. Ebenso werden dadurch auch nicht optimale Orientierungen der Radflansche aufgrund einer fehlerhaften Einstellung vor einer Korrektur dieser Einstellung ausgeglichen.

Dazu muss das Spannfutter zum einen um eine vertikale Raumachse drehbar sein, um Änderungen des Spurwinkels eines Rades folgen zu können. Weiterhin muss das Spannfutter um eine Raumachse in horizontaler Richtung drehbar sein, die zumindest im wesentlichen senkrecht steht zur Radachse, um Änderungen des Sturzwinkels eines Rades folgen zu können.

Besonders vorteilhaft ist das Spannfutter dabei auch in der horizontalen Ebene frei bewegbar, so dass das Spannfutter dann besonders flexibel fehlerhaften Einstellungen der Geometrie der Radachsen der Achse vor einer Korrektur dieser Fehler sowie auch Änderungen dieser Einstellungen bei der Durchführung der Korrektur folgen kann.

Bei der Ausgestaltung nach Anspruch 4 wird die Achse während der Durchführung der Messung mit wechselnden Gewichtskräften beaufschlagt.

Vorteilhaft können dadurch wechselnde Gewichtsbelastungen der Achse simuliert werden. Dadurch kann besonders vorteilhaft auch eine Veränderung des Spur- und insbesondere des Sturzwinkels bei diesen veränderten Gewichtsbelastungen beobachtet und ausgewertet werden. Indem die Spannfutter durch eine Lagerung gehalten werden, die Drehbewegungen um zumindest zwei Raumachsen erlaubt, machen diese Spannfutter die Änderungen der Orientierung der Radflansche durch die geänderten Gewichtsbelastungen ebenso mit wie Änderungen der Orientierung der Radflansche bei der Einstellung der Geometrie der Radachsen der Achse sowie auch nicht optimale Orientierungen der Radflansche aufgrund einer fehlerhaften Einstellung vor einer Korrektur dieser Einstellung wie dies im Zusammenhang mit Anspruch 3 erläutert wurde.

Bei der Ausgestaltung nach Anspruch 5 ist das Spannfutter um seine Mittelachse drehbar gelagert.

Dadurch wird es vorteilhaft möglich, eine Mittelung der Messung während einer Umdrehung vorzunehmen. Die Messung während einer Umdrehung kann beispielsweise am Radflansch oder der einer Messfläche, die an der Vorrichtung angebracht ist, durchgeführt werden. Die Messung kann beispielsweise vorgenommen werden, indem die Orientierung einer Ebene gemessen wird, die der Ebene des Rades im montierten Zustand entspricht. Dies können Messflächen sein, die an der Vorrichtung angebracht sind. Ebenso können beispielsweise die Ebenen der Radflansche erfasst werden oder die Ebenen der Bremsscheiben. Dies erfolgt, indem die Lage von drei Punkten auf den genannten Flächen erfasst wird. Daraus lässt sich dann die Orientierung der Ebene ableiten.

Wenn bezogen auf diese Messung eine Mittelung erfolgt, können systematische Abweichungen aufgrund von Toleranzen bei der Fertigung ausgeglichen werden, die eine zu einer Winkellage zwischen der Ebene führen, die für die Messung verwendet wird und der Ebene des montierten Rades.

Der besseren Messgenauigkeit steht der Nachteil gegenüber, dass die Durchführung der Messung für eine Umdrehung eine bestimmte Zeit benötigt, die zu einer Vergrößerung der Taktzeit führt.

Sofern die Achse richtig aufgenommen wurde, entspricht die Mittelachse des Spannfutters der Radachse.

Bei der Ausgestaltung nach Anspruch 6 sind Messflächen vorhanden, die eben ausgebildet sind und über die Vorrichtung fest und zumindest annähernd senkrecht auf der Radachse stehen.

Bei diesen Messflächen erweist es sich als vorteilhaft, dass die Messung anhand der Vorrichtung selbst durchgeführt werden kann unabhängig von der Achse. Das hat den Vorteil, dass die Messfläche an der Vorrichtung in den geometrischen Abmessungen und in der Beschichtung so ausgeführt ist, dass eine Messung der Geometrie der Achse mit hoher Auflösung und Genauigkeit durchgeführt werden kann.

Ein Ausführungsbeispiel der Erfindung ist in der Zeichnung dargestellt. Es zeigt dabei:
- Fig. 1:: eine Vorrichtung zur Durchführung des Verfahren ohne Achse,
- Fig. 2:: eine Vorrichtung mit den Teilen der Achse, die von der Vorrichtung gehalten werden und
- Fig. 3:: eine Teilansicht einer an der Gegenlagerscheibe anliegende Haltebacke.

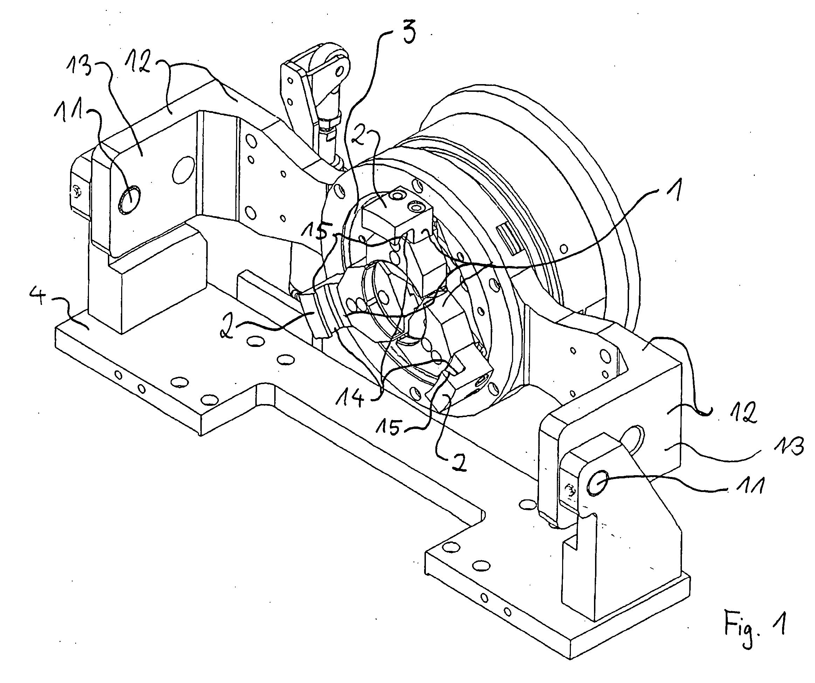

Figur 1 zeigt ein Spannfutter 1. Mittels dieses Spannfutters 1 können über Haltebacken 2, die durch das Spannfutter 1 ausrückbar sind, Haltekräfte ausgeübt werden.

Das Spannfutter 1 wird in einem Punkt auf seiner Mittelachse durch das Lager drehbar gehalten (3). Dadurch ist das Spannfutter 1 drehbar um eine Achse, die der Radachse eines an der Achse montierten Rades zumindest annähernd entspricht, die durch die Vorrichtung gehalten werden soll.

Hinsichtlich seiner Orientierung wird das Spannfutter 1 weiterhin so gehalten, dass es zum einen um eine vertikale Achse drehbar ist. Dadurch kann das Spannfutter 1 in seiner Orientierung Änderungen der Spurwinkels eines Rades folgen. Weiterhin ist die Orientierung des Spannfutters 1 vorteilhaft um eine Achse drehbar, die sich in horizontaler Ebene senkrecht zur Radachse erstreckt. Dadurch kann das Spannfutter 1 in seiner Orientierung Änderungen des Sturzwinkels des Rades folgen, die beispielsweise aus sich ändernden Gewichtsbelastungen der Achse resultieren können.

Das Gehäuse 4 ist mit einer hier nicht dargestellten Schwimmplatte verbunden. Diese Schwimmplatte ist in der horizontalen Ebene frei bewegbar. Dadurch kann das Spannfutter 1 Änderungen der Achse in horizontaler Richtung folgen, die der Radachse eines an der Achse montierten Rades entspricht. Dadurch kann das Spannfutter 1 also Änderungen des Spurwinkels folgen.

Die Aufhängung 12 der Haltevorrichtung ist um eine Drehachse 11 drehbeweglich befestigt. Dadurch kann das Spannfutter 1 Änderungen des Sturzwinkels der Radachse folgen.

Es ist weiterhin zu sehen, dass die Aufhängung 12 Haltearme 13 aufweist, mittels denen die Abstützung der Haltevorrichtung versetzt ist gegenüber der Ebene des Spannfutters 1. Wegen des dadurch entstehenden Drehmomentes erweist es sich als vorteilhaft, dass mit der Halterung nach der vorliegenden Erfindung größere Momente aufgebracht werden können.

Durch die Haltearme 13 wird also die Achse vorteilhaft in einer Ebene abgestützt, die nach an den realen Verhältnissen bei einem montierten Fahrzeugrad liegt. Die Abstützung erfolgt dann nahe am Fußpunkt der Mittelebene eines Rades, nachdem dieses montiert wurde.

Weiterhin ist das Spannfutter 1 in einem Lager 3 gehalten, so dass das Spannfutter 1 um seine Mittelachse drehbar ist, die im Falle, dass die Achse richtig von der Vorrichtung aufgenommen wurde, der Radachse entspricht. Dadurch wird es beispielsweise möglich, entsprechend den Ausführungen in der Beschreibungseinleitung eine Mittelwertbildung bei der Messung vorzunehmen.

Figur 1 ist weiterhin zu entnehmen, dass die Haltebacken 2 ein U-förmiges Profil 14 aufweisen, das den Außenumfang der Gegenlagerscheibe für die Bremsscheibe sowie ein montiertes Rad umgreift. Die hintere Flanke 15 dieses U-förmigen Profils 14 ist abgeschrägt. Beim Anziehen des Spannfutters 1 gleitet diese abgeschrägte Flanke 15 auf der Rückseite der Gegenlagerscheibe nach unten und führt dazu, dass die Haltevorrichtung in Richtung der Achse gezogen wird.

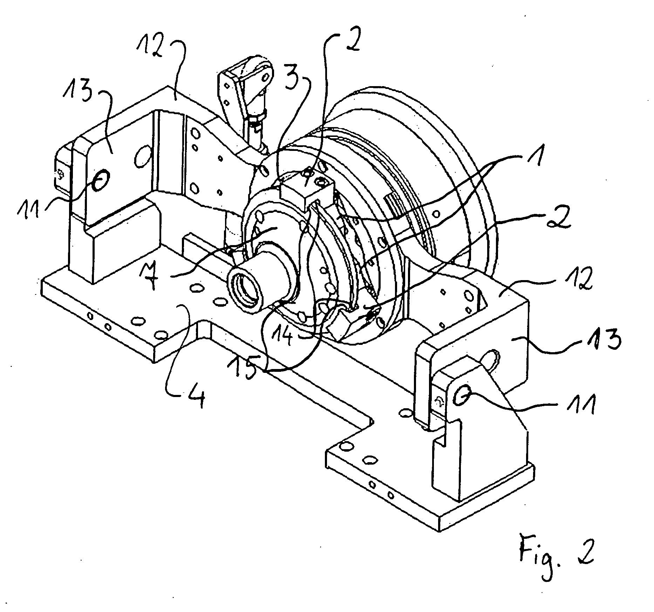

Figur 2 zeigt eine Vorrichtung mit den Teilen der Achse, die von der Vorrichtung während der Durchführung der Messung und ggf. der Einstellung des Spur- und/oder Sturzwinkels gehalten werden.

Es sind Haltebacken 2 des Spannfutters 1 zu sehen, mittels denen ein Radflansch im Bereich des Außenumfangs der Gegenlagerscheibe 7 für die Bremsscheibe und das zu montierende Fahrzeugrad gehalten wird. Die Bremsscheibe ist nicht montiert, damit die Haltebacken 2 den Außenumfang der Gegenlagerscheibe 7 umgreifen können. Außer den im Zusammenhang mit Figur 1 bereits erläuterten Bestandteilen der Vorrichtung ist eine Messfläche 6 zu sehen, mittels der die Orientierung der Radachse messbar ist.

Mittels einer in den Figuren 1 und 2 gezeigten Vorrichtung ist eine Achse an beiden Seiten lagerbar. Vorteilhaft können damit Spur- und/oder Sturzwinkel von Radachsen an Achsen von Fahrzeugen gemessen werden, insbesondere vor dem Einbau der Achse in das Fahrzeug. Mittels der Vorrichtung kann auch das Fahrzeug insgesamt gelagert werden, wenn die Achse montiert wurde, um dann auch entsprechende Mess- und Einstellarbeiten vornehmen zu können.

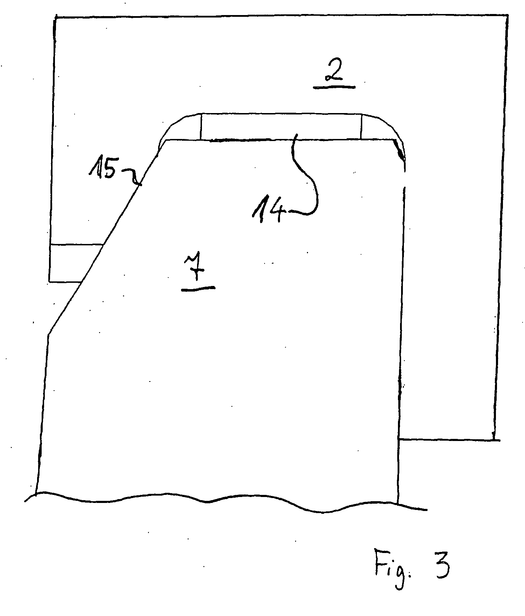

Figur 3 zeigt eine Teilansicht einer an der Gegenlagerscheibe 7 anliegenden Haltebacke 2. Es ist das U-förmige Profil 14 mit der abgeschrägten hinteren Flanke 15 zu sehen. Insbesondere ist zu sehen, dass die Haltebacke 2 nicht am Außenumfang der Gegenlagerscheibe 7 anliegt.

Zusätzlich zur Halterung im Bereich des Außenumfangs der Gegenlagerscheibe 7 kann die Haltevorrichtung an der Radnabe anliegen. Dadurch kann bei der Montage der Haltevorrichtung eine Vorzentrierung erfolgen, so dass die Haltebacken dann einfach im Bereich des Außenumfangs der Gegenlagerscheiben 7 montiert werden können. Nach der Montage können dann die Messungen mit den größeren eingeleiteten Kräften vorgenommen werden.

## Patentansprüche

1. Verfahren zur Messung bzw. Messung und Einstellung der Geometrie der Radachsen einer Achse eines Fahrzeugs, wobei die Radflansche der Achse während der Durchführung der Messung der Geometrie mittels eines Spannfuttersystems (1) haltbar sind, wobei die Radflansche durch das Spannfuttersystem (1) stützend gelagert werden,
**dadurch gekennzeichnet, dass** das Spannfuttersystem (1) die Radflansche der Achse im Bereich des Außenumfangs der Gegenlagerscheiben (7) für die Bremsscheiben und die Räder greift.

2. Verfahren nach Anspruch 1,
**dadurch gekennzeichnet, dass** das Spannfuttersystem (1) so gestaltet ist, dass die Haltebacken (2) des Spannfuttersystems U-förmig (14) ausgestaltet sind, wobei zumindest die hintere Flanke (15) abgeschrägt ist.

3. Verfahren nach Anspruch 1 oder 2,
**dadurch gekennzeichnet, dass** das Spannfutter (1) so gelagert und gehalten wird, dass es zumindest um zwei Raumachsen drehbeweglich ist.

4. Verfahren nach Anspruch 3,
**dadurch gekennzeichnet, dass** die Achse während der Durchführung der Messung mit wechselnden Gewichtskräften beaufschlagt wird.

5. Verfahren nach einem der Ansprüche 1 bis 4,
**dadurch gekennzeichnet, dass** das Spannfutter (1) um seine Mittelachse drehbar gelagert ist (3).

6. Verfahren nach einem der Ansprüche 1 bis 5,
**dadurch gekennzeichnet, dass** die Vorrichtung Messflächen (6) aufweist, die eben ausgebildet sind und über die Vorrichtung fest und zumindest annähernd senkrecht auf der Radachse stehen.

## Claims

1. A method of measuring, or measuring and adjusting, the geometry of the wheel axes of a vehicle axle, where the wheel flanges of the axle can be held by means of a chuck system (1) while the geometry is measured, said wheel flanges being supported by said chuck system (1),
**characterised in that** the chuck system (1) grips the wheel flanges of the axle in the area of the outer periphery of the thrust bearing plates (7) for the brake discs and the wheels.

2. The method of claim 1,
**characterised in that** the chuck system (1) is engineered such that the clamping jaws (2) of the chuck system are of U-shaped configuration (14), with at least the rear flank (15) having a chamfer.

3. The method of claim 1 or 2,
**characterised in that** the chuck (1) is held and supported such as to be rotatable at least about two spatial axes.

4. The method of claim 3,
**characterised in that** varying weights are exerted on the axle during the measuring procedure.

5. Method according to one of the claims 1 to 4,
**characterised in that** the chuck (1) is held in a bearing (3) such that the chuck is rotatable about its central axis.

6. Method according to one of the claims I to 5,
**characterised in that** the device has planar measuring surfaces (6) that are fixed in position, at least approximately perpendicular to the wheel axis, by way of the device.

## Revendications

1. Procédé pour la mesure ou pour la mesure et le réglage de la géométrie des essieux de roues de l'essieu d'un véhicule, les brides de roue de l'essieu pouvant être maintenues durant la réalisation de la mesure de la géométrie au moyen d'un système de serrage (1), les brides de roue étant logées soutenues par le système de serrage (1), **caractérisé en ce que** le système de serrage (1) saisit les brides de roues des essieux au niveau du pourtour du disque de butée (7) pour les disques de frein et les roues.

2. Procédé selon la revendication 1, **caractérisé en ce que** le système de serrage (1) est réalisé de telle sorte que les mâchoires de serrage (2) du système de serrage sont en forme de U (14), au moins le flanc arrière (15) étant biseauté.

3. Procédé selon la revendication 1 ou 2, **caractérisé en ce que** le mandrin de serrage (1) est logé et maintenu de telle sorte qu'il peut pivoter au moins autour de deux axes de l'espace.

4. Procédé selon la revendication 3, **caractérisé en ce que** l'essieux est soumis durant la réalisation de la mesure à des forces de poids variables.

5. Procédé selon l'une des revendications 1 à 4, **caractérisé en ce que** le mandrin de serrage (1) est logé pivotant autour de sont axe médian.

6. Procédé selon l'une des revendications 1 à 5, **caractérisé en ce que** le dispositif présente des surfaces de mesure (6) planes qui sont placées fixement au-dessus du dispositif et au moins pratiquement perpendiculairement sur l'essieu de la roue
